# EUROPÄISCHE PATENTSCHRIFT

(11) **EP 1 811 271 B1**
(45) Veröffentlichungstag und Bekanntmachung des Hinweises auf die Patenterteilung: **22.07.2015**
(21) Anmeldenummer: 07000406.4
(22) Anmeldetag: 10.01.2007
(51) Int. Cl.: G01D 7/00, G01D 4/00

(54) **Selbstkonfigurierbares Verbrauchsanzeigegerät mit Funkempfänger im Heimbereich und Verfahren hierzu**
Self configurable consumption display device with radio reception for home use and method for the same
Appareil d'indication de consommation autoconfigurable doté d'un récepteur radio dans la zone locale et son procédé

(30) Priorität: 23.01.2006 DE 102006003333
(43) Veröffentlichungstag der Anmeldung: 25.07.2007
(73) Patentinhaber: Diehl Metering GmbH, 91522 Ansbach (DE)
(72) Erfinder: Rac, Michael, 91522 Ansbach (DE)
(74) Vertreter: Stippl, Hubert

(56) Entgegenhaltungen:
- US-A1- 2003 058 129
- US-A1- 2005 222 784

## Beschreibung

Die Erfindung betrifft gemäß Patentanspruch 1 ein Verbrauchsanzeigegerät mit Funkempfänger im Heimbereich und gemäß Patentanspruch 4 ein Verfahren hierzu.

Ein Verbrauchsanzeigegerät gemäß dem Oberbegriff des Anspruchs 1 ist aus der US 2005/0222784 A1 bekannt. Dieses bekannte Verbrauchsanzeigegerät dient dazu, die Verbrauchsdaten einer mit einem Durchflusszähler ausgestatteten Detektionseinheit über eine drahtlose Datenverbindung zu empfangen, wobei die Detektionseinheit selbst keine Anzeigeeinrichtung aufweist. Das Verbrauchsanzeigegerät ist dazu vorgesehen, an einem geeigneten Ort, an dem eine Ablesung leicht möglich ist, montiert zu werden. Zwischen der Detektionseinheit und dem Verbrauchsanzeigegerät werden die Daten entweder schnurlos oder über eine Verkabelung übertragen.

Aus der US 2003/0058129 A1 ist ein automatisches Ablesesystem für einen Energiezähler bekannt. Das System umfasst eine Mehrzahl von Energiezählern, wobei jeder Energiezähler jeweils eine zugehörige Ausleseeinrichtung aufweist. Jeder Energiezähler mit zugehöriger Ausleseeinrichtung steht mittels einer Telekommunikationsverbindung mit einem Kontrollcenter in Verbindung. In dem Kontrollcenter werden die Daten der einzelnen Energiezähler über eine zugehörige ID erfasst und ausgewertet. Beim Anschalten der Ausleseeinrichtung des jeweiligen Energiezählers erfolgt eine Selbstkonfigurierung sowie eine Feststellung, ob ein Ausleseanforderungssignal von dem Kontrollcenter vorliegt oder nicht.

Versorgungsunternehmen, etwa Energieversorgungsunternehmen oder Wasserversorgungsuntemehmen, erstellen die Verbrauchsabrechnungen auf der Basis von Zählerstandsdaten von den Kunden zugeordneten Verbrauchszählern, welche meistens in der Nähe der Verbrauchsstellen installiert sind. Verbrauchszähler können beispielsweise Gaszähler, Wasserzähler, Stromzähler, Wärmezähler, Heizkostenverteiler etc. sein, wobei die Zählerstandsdaten jeweils für zurückliegende Verbrauchsperioden ein Maß für die an der Verbrauchsstelle verbrauchte Menge angeben. In der Regel erfolgt die Erfassung der Zählerstandsdaten bzw. die Zählerablesung für ein Haus, eine Wohnung oder ggf. eine einzelne Verbrauchsstelle mindestens einmal jährlich.

Um einen in einem Haushalt zu installierenden Wasserzähler zu schaffen, der es dem Versorgungsunternehmen erlaubt, den Zählerstand sicher und mit möglichst kleinem Aufwand ohne Betreten der jeweiligen Wohnung des Endkunden abzulesen, der einfach auch im Nachrüstverfahren installierbar ist, und der eine sichere Erfassung des zu übertragenden Zählerwerts bei gleichzeitiger Gewährleistung eines störungsfreien Sendebetriebs ermöglicht, ist aus der DE 44 28 996 C2 ein Wasserzähler mit einer in einem ersten Gehäusebereich angeordneten Messeinrichtung, einer in einem zum ersten abgedichteten zweiten Gehäusebereich angeordneten, mit der Messeinrichtung zusammenwirkenden Zähl- und/oder Anzeigeeinrichtung und mit einer mit der Zähl- und/oder Anzeigeeinrichtung zusammenwirkenden, aus einer Energiequelle gespeisten funktechnischen Sendeeinrichtung zum Aussenden des Zählerstandes an ein zentrales, entfernt angeordnetes Empfangssystem bekannt. Die Sendeeinrichtung umfasst einen Sensor zur Erfassung einer, an der Zähl- und/ oder Anzeigeeinrichtung angeordneten Markierung, welche als mechanische Zähleinrichtung ausgestaltet ist. Ferner ist eine im Wasserzähler integrierte Einrichtung zur Abschirmung der funktechnischen Sendeeinrichtung vorgesehen, derart, dass diese und damit der in periodischer (beispielsweise mehrmals täglich) oder stochastischer Abfolge getätigte Sendebetrieb magnetisch nicht beeinflussbar ist. Bei einer alternativen Ausgestaltung steht die Sendeeinrichtung mit einem die elektronische Einrichtung, insbesondere eine als LCD-Einrichtung ausgebildete Zähl- und/oder Anzeigeeinrichtung, steuernden, aus einer Energiequelle gespeisten elektronischen Steuerelement - vorzugsweise einem Mikroprozessor - in Verbindung. Das separate Empfangssystem/ stationäre Empfangsgerät ist beispielsweise zentral im Flur, Keller oder dergleichen eines mehrstöckigen Mietshauses angeordnet, wo der Ablesende einfach und ohne Betreten der jeweiligen Wohnungen den Zählerstand ablesen kann. Ist das Mietshaus komplett mit derartigen Wasserzählern ausgerüstet, können alle in den verschiedenen Wohnungen angeordneten Zähler gleichzeitig am stationären Empfangsgerät abgelesen werden, ohne dass überhaupt jemand anwesend sein muss. Es reicht aus, wenn die Ableseperson Zutritt zu dem Empfangsgerät im Treppenhaus des Hauses hat. Ein weiterer Vorteil der Funkübertragung, die bei periodischem Betrieb beispielsweise jede Stunde oder pro hundert Liter erfolgt, ist die Reduzierung der Ablesefehler durch automatisch gesicherte Datenübertragung. Ferner herrscht, da ohne Aufwand in kürzeren Abständen, z. B. monatlich, abgelesen werden kann, eine größere Gerechtigkeit bei Tarif- oder Mieterwechsel. Da, keinerlei zusätzlich in der Wohnung zu installierenden Elemente erforderlich sind, ist der Wasserzähler mit funktechnischer Sendeeinrichtung auch mühelos im Nachrüstverfahren installierbar, insbesondere wenn der zweite, die Zähl-und/oder Anzeigeeinrichtung und die Sendeeinrichtung und gegebenenfalls die Energiequelle und das Steuerelement tragende Gehäusebereich lösbar am ersten, die Messeinrichtung enthaltenden Gehäusebereich angeordnet ist. Die Abschirmung und auch der periodische oder stochastische Sendebetrieb gewährleisten eine sichere Übertragung.

Infolge der durch die Mehrweg-Funkausbreitung verursachten Interferenzfunklöcher wird auch für von den Verbrauchszählem gesendeten Funktelegramme in Gebäuden darauf geachtet, dass die Funksendeeinrichtung eines betreffenden Verbrauchszählers im potenziellen Empfangsbereich mindestens zweier solcher stationärer "Empfänger liegt. Die Komponenten für den Funkempfang und für die Funkweiterleitung sind jedoch in Beschaffung, Montage, Inbetriebnahme, und Betrieb relativ teuer, so dass sich (vor allem bei einer meist nur jährlichen Verbrauchsabrechnung) ihr Betrieb nicht aus den eingesparten Kosten für das Ablesepersonal finanzieren lässt. Bei genügend hoher Sendehäufigkeit der Verbrauchszähler kann es praktikabel sein, die Funkauslesung der Verbrauchszähler mittels mobiler Empfänger durchzuführen. Dabei hat das Ablesepersonal mit einer mobilen Funkempfangs-Datenübernahmeeinrichtung eine Datenerfassungstour zu absolvieren, bei der die Funkempfangs-Datenübernahmeeinrichtung nacheinander in die Bereiche der Sendereichweiten der per Funk auszulesenden Verbrauchszähler gebracht wird. Beim sogenannten drive-by wird die mobile Funkempfangs-Datenübemahmeeinrichtung mit einem Fahrzeug langsam eine Straße entlang bewegt, an der Häuser mit zur Verbrauchsdaten-Erfassung anstehenden "funkenden" Verbrauchszählern stehen; beim sogenannten walk-by geht die die Funkempfangs-Datenübemahmeeinrichtung mitführende Person das betreffende Gebiet zu Fuß ab; beim sogenannten walk-in begeht die die mobile Funkempfangs-Datenübernahmeeinrichtung mitführende Person über das Treppenhaus alle Stockwerte des Hauses, um von sämtlichen zur Funkauslesung anstehenden Verbrauchszählem die unidirektional von den Sendeeinrichtungen der Verbrauchszähler gesandten Sendetelegramme nacheinander zu empfangen. Ein solches mobiles Verbrauchsdatenerfassungssystem und ein Verfahren zur Funkauslesung der Verbrauchszähler bei der Datenerfassungstour ist beispielsweise aus der DE 101 33 366 C2 bekannt. Im einzelnen weist das Verbrauchsdatenerfassungssystem eine in Sendereichweite der Funksendeeinrichtung des Verbrauchszählers zu bringende mobile Datenübernahmeeinrichtung mit einer Funkempfangseinrichtung zum Empfang der von dem betreffenden Verbrauchszähler gesendeten Daten und ein mit der Funkempfangseinrichtung in Kommunikationsverbindung stehendes, insbesondere mit der Datenübernahmeeinrichtung zu einer Geräteeinheit kombiniertes Mobilfunksende-und -empfangsgerät eines Mobilfunksystems auf Das Mobilfunksende- und -empfangsgerät ist dazu eingerichtet, die von einem betreffenden Verbrauchszähler mittels der Funkempfangseinrichtung übernommenen Zählerstandsdaten in Zuordnung zu den Zähleridentifikationsdaten zu einer zentralen Datenerfassungsstelle zu senden. Die gesendeten Daten werden über das Mobilfunksystem zu der zentralen Datenerfassungsstelle innerhalb eines bestimmten Zeitintervalls, das mit dem Zeitpunkt der Übernahme der Zählerstandsdaten in die Datenübernahmeeinrichtung beginnt, übertragen. Weiterhin werden Ortsinformationen, wobei die Gerätekombination aus Datenübernahmeeinrichtung und Mobilfunksende- und empfangsgerät zusätzlich Komponenten eines Orts-Lokalisierungssystems - insbesondere GPS-Funkortungssystems - umfasst, über die Lage der Verbrauchszähler über das Mobilfunksystem von der Datenerfassungsstelle zu dem Mobilfunk-Endgerät der Datenerfassungsperson gesendet. Ein Rechner der zentralen Datenerfassungsstelle kann die Reihenfolge der zur Auslesung anstehenden Verbrauchszähler so festlegen, dass die von der Datenerfassungsperson zurück zu legenden Wege möglichst keine Umwege umfassen. Falls ein Zähler unbeabsichtigt ausgelassen wird oder wegen eines Defektes, einer Störung und dergleichen kein Signal sendet, wird dies in der zentralen Datenerfassungsstelle automatisch registriert, weil von einem solchen Zähler kein erwarteter Datensatz mit Identifikationsdaten zu der zentralen Datenerfassungsstelle gelangt. Von der zentralen Datenerfassungsstelle wird dann automatisch eine entsprechende Rückmeldung über den nicht erfassten Verbrauchszähler über das Mobilfunksystem zu der Datenerfassungsperson veranlasst. Diese kann erneut die Gerätekombination in den Bereich der Soll-Funkreichweite des ausgelassenen Verbrauchszählers führen, um durch etwaige Suche nach empfanggünstigeren Standorten eventuell doch noch ein Datentelegramm (Zählerstandsdaten, Zähleridentifikationsdaten, Ortsinformationsdaten) von dem betreffenden Verbrauchszähler zu empfangen. Funktioniert auch dies nicht, kann die Datenerfassungsperson vor Ort versuchen, Zugang zu dem Verbrauchszähler zu erhalten, um das Problem zu erkennen und möglicherweise auch gleich zu beheben. Die Sendeleistung und die Sendereichweite des so genannten Primärfunksenders ist vergleichsweise gering, es kann eine Sendereichweite von wenigen Metern ausreichen, und die Sendehäufigkeit liegt bei mehreren Funktelegrammen pro Minute, wobei die Dauer jedes Funktelegramms kurz ist und z. B. nur einige Millisekunden beträgt. Die Datenübernahmeeinrichtung D enthält ferner ein Endgerät eines öffentlichen WAN-Mobilfunksystems, wobei dieses so genannte Sekundärfunk-Endgerät ein Funktelefon und/oder ein Funkmodem, insbesondere nach einem oder mehreren der Standards: GSM, SMS, GPRS, UMTS, TETRA sein kann. Die Gerätekombination kann auch noch dazu genutzt werden, die Daten neu montierter Verbrauchszähler zum Zwecke der Ergänzung der Datenbank in der zentralen Datenerfassungsstelle zu übermitteln.

In der Praxis wurde festgestellt, dass funkende Verbrauchszähler für die mobile Funkauslesung und funkende Verbrauchszähler für die stationäre Funkauslesung deutliche Unterschiede in den Anforderungen an die Funktelegrammlänge, Sendehäufigkeit und Sendeleistungen aufweisen, aber jeweils mit einer Batterie akzeptabler Größe und mit einem kleinen Pufferkondensator auskommen können. In Weiterbildung ist aus der DE 101 33 367 C2 ein universell einsetzbarer funkender Verbrauchszähler bekannt, der dazu vorbereitet ist, dass er in wenigstens zwei unterschiedlichen Sendebetriebsarten senden kann. Nämlich in einer ersten Sendebetriebsart werden Funktelegramme aussendet, die im Telegrammaufbau oder/und Sendehäufigkeit oder/und Sendeleistung für den mobilen Funkempfang (mobile Funkauslesung) optimiert sind. In einer zweiten Sendebetriebsart werden Funktelegramme aussendet, die im Telegrammaufbau oder/und Sendehäufigkeit oder/und Sendeleistung für den Empfang mit stationären Funkempfängern (stationäre Funkauslesung) optimiert sind. Dabei weist der Verbrauchszähler in der Sendebetriebsart für stationäre Funkauslesung eine Sendeleistung auf, die um wenigstens 3 Dezibel grösser ist als die Sendeleistung in der Sendebetriebsart für die mobile Funkauslesung. Der Verbrauchszähler sendet in der Sendebetriebsart für mobile Funkauslesung Funktelegramme, die um wenigstens 30% länger sind als die Funktelegramme in der Sendebetriebsart für stationäre Funkauslesung. Vorzugsweise ist die größere Funktelegrammlänge, d. h. größere Datenmenge, dadurch begründet, dass Zählerstandsinformationen aus zurückliegenden Zeitpunkten zusätzlich zu den aktuellen Zählerstandsinformationen in den Funktelegrammen enthalten sind. Der Verbrauchszähler führt vollautomatisch, z. B. unter der Kontrolle eines. Mikroprozessors, beide Sendebetriebsarten im Wechsel durch, so dass derselbe Zähler im periodischen oder im nicht periodischen, quasi statistischen Wechsel mit vorgebbarer relativer Häufigkeit Funktelegramme für stationäre Funkauslesung und Funktelegramme für mobile Funkauslesung sendet. Bei mehrgeschossigen Wohnhäusern ist ein Empfangsgerät (Primärfunk) mehreren, vorzugsweise allen funkenden Verbrauchszählern zugeordnet, so dass die Anschaffungs- und Installationskosten für die stationären Empfangsgeräte bei gesamtwirtschaftlicher Betrachtung durchaus akzeptabel sind, da die Verbrauchsdatenerfassung bei den Häusern kein Auslesepersonal erfordert und somit Personalkosten eingespart werden können. Im Fall eines Siedlungsgebietes mit Einfamilienhäusern wird die Funkauslesung der Zähler mit der mobilen Gerätekombination (Funkempfangsgerät und Funktelefon und/oder ein Funkmodem für den Sekundärfunk) durchgerührt. Allgemein wäre es möglich, sämtliche Verbrauchszähler mit der mobilen Gerätekombination auszulesen. Andererseits besteht die Möglichkeit, stationäre Empfänger auch in den Häusern nachträglich einzubauen, um auf stationäre Funkauslesung überzugehen, etwa weil die Anschaffungs- und Installationskosten für stationäre Funkempfänger im Verhältnis zu den Personalkosten bei der mobilen Funkauslesung so weit gesunken sind, dass die stationäre Funkauslesung auch bei den Häusern wirtschaftlich geworden ist. An den Verbrauchszählern muss bei einem solchen Wechsel der Empfangsart nichts geändert werden.

Weiterhin ist aus der DE 697 20 139 T2 ein System zum Überwachen des Wasserverbrauchs einschließlich der Energienutzung von wasserverbrauchenden Vorrichtungen und Überwachen der Energienutzung von wassergespeisten Erwärmungs- und Kühlvorrichtungen in Gebäudekomplexen mit mehreren Einheiten bekannt, bei dem bezogen auf den Nutzer (Mieter in einem Apartmenthaus) sowohl der Energieverbrauch des heißen Wassers berechnet als auch Lecks gewartet und fehlerhaft offene Leitungen geschlossen werden können. Um einerseits die Wasserwärmeenergienutzung andererseits den Zustand einer Wasserverbrauchsstruktur zu überwachen, ist neben dem Wasserzähler in jeder Leitung eine Überwachungsvorrichtung mit Wärmethermistor/Thermoelement und Mikroprozessor angeordnet, welche ein batteriebetriebenes versiegeltes Gerät ist, und es ist ein lokaler Funkempfänger vorgesehen, der die von allen Überwachungsvorrichtungen übermittelten Funksignale empfangen und dekodieren kann. Der Mikroprozessor kann auch berechnen, ob eine wasserverbrauchende Vorrichtung offengelassen wurde (z.B. eine Badewanne, die kontinuierlich läuft). Mit den lokalen Empfängern ist weiterhin ein lokaler Basisempfänger fest verdrahtet, welcher keine Daten von einer Überwachungsvorrichtung, sondern nur Daten von lokalen Empfängern empfangen kann und welcher eine Datenbank bereitstellt. Der lokale Basisempfänger kann über Telefonleitungen mit einer beliebigen Anzahl von lokalen Basisempfängern und/oder anderen entfernten Empfängern (zentrale Datenerfassung zur Erstellung von Rechnungen für Wasser-, Energie-und Abwasserkanalnutzung für jede Einheit) kommunizieren. Anstatt über Telefonleitungen oder Drähte könnten die Daten von einem lokalen Empfänger an andere lokale/entfernte (Basis)Empfänger per Funk übermittelt werden Der lokale Empfänger kann täglich, wöchentlich, monatlich, Quartalsweise, etc. Gesamtbeträge für den Volumenstrom und die Energienutzung, d. h. einen Verbrauch, für jede Einheit/Nutzer berechnen und kann bei Lecks oder offenen Wasserhähnen Alarmsignale ausgeben (z.B. durch einen hörbaren Alarm oder einen Anruf bei einer Sicherheitseinrichtung oder kommunizieren mit einem zentralen Überwachungs- oder Verrechnungssystem), die die Einheit und die wasserverbrauchende Vorrichtung abhängig von dem Alarmsignal identifizieren.

Weiterhin ist in der US 2004/0259523 A1 die Funkdatenübertragung an eine Abrechnungszentrale beansprucht.

Schließlich ist aus der US 2001/0024165 A1 der Aufbau eines Verbrauchsdaten-Übertragungsnetzes mit Kurzstreckenfunk zu einen Datenkonzentrator bekannt. Der Datenkonzentrator ist z.B. an einem Laternen- /Telegrafenmast, unter Umständen mit Solarstromversorgung montiert. Zwar wird als Möglichkeit zur Konfiguration die automatische, unkontrollierte Weiterleitung aller Funktelegramme genannt; diese Möglichkeit wird jedoch als unbrauchbar verworfen, da dann nicht erkannt werden kann, ob es defekte Zähler gibt, die nicht senden.

Wie die vorstehende Würdigung des Standes der Technik aufzeigt, sind unterschiedlich ausgestaltete Systeme zur automatischen Verbrauchsdatenerfassung, beispielsweise Funksysteme mit einem oder mehreren stationären Empfänger oder Ablesung mit einem mobilen Empfänger, bekannt. In der Regel sind die Geräte für das Energieversorgungsunternehmen derart ausgestaltet, um Verbrauchsdaten vom Ort des Entstehens (also beim Endkunden, z.B. Heimbereich, aber auch Industrie oder Kommunen), möglichst einfach und kostengünstig zu erfassen (Ressourcenzähler z.B. Wasserzähler) und ebenfalls möglichst einfach und kostengünstig an eine Zentrale zu überträgen (Kommunikationsverfahren), wo Sie in automatisierten Abrechnungen für die oben genannten Endkunden verarbeitet werden können. Der Anwender ist immer das Energieversorgungsunternehmen, welches die Ressourcenzähler beschafft, beim Kunden einbaut, wartet, abliest; das Gleiche gilt für die Kommunikationseinrichtungen. Der Nachteil von Systemen mit stationär im Gebäude montierten Funkempfängern ist, dass die Systemkosten deutlich höher ausfallen als bei Systemen ohne stationären Empfänger. Zudem gehen bei Ausfall des Empfängers alle gespeicherten Verbrauchswerthistorien sämtlicher empfangenen Sender verloren. Um dies zu vermeiden, müssen durch weitere Empfänger kostenintensive Redundanzen für die Verbrauchsdatenübertragung per Funk hergestellt werden. Die Verbrauchszählerdaten werden beim vorstehend gewürdigten Stand der Technik stets an eine Zentrale zur Abrechnung zu übertragen, bzw. es werden eventuelle Leckagen an eine Zentrale gemeldet. Wenig Beachtung fand jedoch der Personenkreis der Endkunden, z.B. im Heimbereich. Deshalb fehlt in der Praxis ein Verbrauchsanzeigegerät, welches unabhängig von anderen technischen Gegebenheiten universell einsetzbar ist und welches sich für den jeweiligen Anwendungsfall automatisch konfiguriert. Besonders bedeutsam ist dies, weil die Messgeräte herstellende Industrie als äußerst fortschrittliche, entwicklungsfreudige Industrie anzusehen ist, die schnell Verbesserungen und Vereinfachungen aufgreifen und in die Tat umsetzen.

Der Erfindung liegt die Aufgabe zugrunde, ein Verbrauchsanzeigegerät mit Funkempfänger im Heimbereich derart auszugestalten, dass sich das Verbrauchsanzeigegerät für die jeweilige Anwendung automatisch konfiguriert.

Diese Aufgabe wird mit den Merkmalen des kennzeichnenden Teils von Anspruch 1 gelöst.

Das erfindungsgemäße Verbrauchsanzeigegerät weist den Vorteil auf, dass kein portabler Computer zur Konfiguration benötigt wird und dass keine Fehler bei der Eingabe der Zählerdaten auftreten können. Der Aufwand für das Verbrauchsanzeigegerät ist verhältnismäßig klein und erstmalig ist dem Kunden die Möglichkeit der Selbstüberwachung (Verbrauch / Leckage) vor Ort gegeben. Durch die Anzeigemittel in Form einer Anzeige und / oder durch Akustik kann sich der Benutzer jederzeit informieren und infolge der Selbstkonfiguration wird der einfache Einsatz in vielen Anwendungen und auf überraschend einfache und kostengünstige Art und Weise ermöglicht. Hinzukommt, dass auch ein ungeübter Benutzer das Verbrauchsanzeigegerät bedienen kann, da dieses einen Wechsel der Abfrage selbstständig erkennt und nach Maßgabe dieser sich konfiguriert, ohne dass die Gefahr eines unbefugten Datenzugriffs oder eines Benutzerfehlers besteht.

Weiterhin wird diese Aufgabe erfindungsgemäß durch ein Verfahren gemäß Anspruch 4 gelöst.

Das erfindungsgemäße Verfahren weist den Vorteil auf, dass durch ein Zusatzgerät zu den schon vorhandenen Verbrauchzähleinrichtungen, nämlich das erfmdungsgemäße Verbrauchsanzeigegerät, dem Endkunden ein bequemeres Ablesen seines Verbrauchs ermöglicht wird. Grundsätzlich ist von den Energieversorgungsunternehmen vorgeschrieben, dass der Endkunde den Zählerstand eines Ressourcenzählers am Gerät ablesen kann, daher haben alle Geräte auch immer eine Anzeige. Ein Endkunde kann deshalb an sich seine Verbrauchsdaten durch Abgehen und optisches Ablesen all seiner Zähler manuell ebenfalls erfassen. Durch penibles Vergleichen der Verbrauchswerte kann er auch einer Leckage auf die Spur kommen. Das erfindungsgemäße Verfahren vereinfacht dies, indem alle Verbrauchsdaten, auch von örtlich schwierig zugänglichen Ressourcenzählern, an einer für den Endkunden bequemen Stelle vereinigt werden und zusätzlich eine automatische Leckageerkennung geboten wird. Die Entwicklung, Produktion und Vertrieb des Verbrauchsanzeigegerät kann dabei unabhängig von einer speziellen Anwendung erfolgen und ermöglicht, entsprechend der Benutzeranforderungen, die Ausgestaltung einer Produktfamilie mit einfachen bis zu hochwertigen Verbrauchsanzeigegeräten mit Mehrdienstfähigkeit (beispielsweise örtlicher Temperatur- und/oder Zeitanzeige).

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:

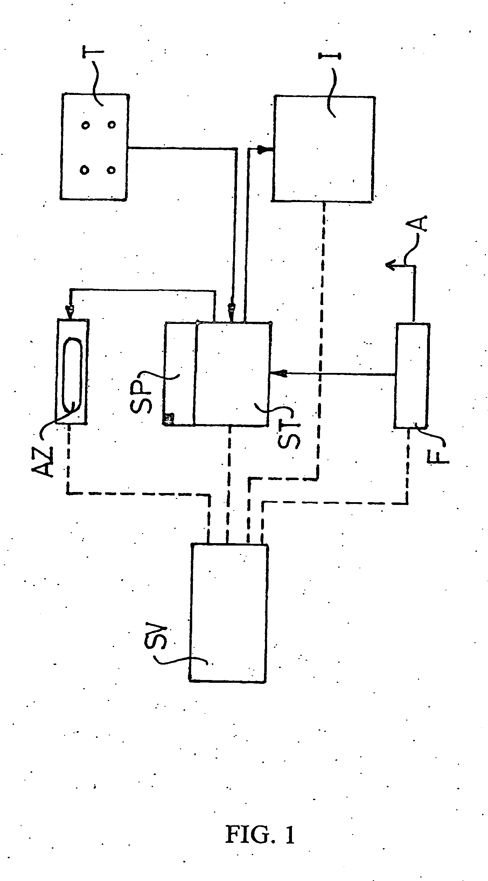

- FIG. 1: das Blockschaltbild einer bevorzugten Ausführungsform des erfindungsgemäßen Verbrauchsanzeigegeräts.

FIG. 1 zeigt eine bevorzugte Ausführungsform des erfindungsgemäßen Verbrauchsanzeigegeräts zur Anzeige des Zählerstandes von mindestens einem Verbrauchszähler im Heimbereich eines Endkunden. Der Einsatz des erfindungsgemäßen Verbrauchsanzeigegeräts ist bei vielen Anwendungen möglich, ohne dass jeweils - wie beim Stand der Technik - für die neue Anwendung ein spezielles Gerät eingesetzt werden muss. Dies ist darauf zurückzuführen, dass das erfindungsgemäße Konzept auf Konfigurierbarkeit aufbaut, eine einheitliche, geräteunabhängige Bedienung ermöglicht, und die einfache Anpassung an die jeweiligen Gegebenheiten und Einbindung ohne Änderung der Erfindung bzw. des Grundkonzepts erlaubt. Ein sehr häufiger Fehler ist z.B., dass die Zählernummer (Funkadresse) fehlerhaft eingegeben wird. Beim erfindungsgemäßen Verbrauchsanzeigegerät ist die Zähleradresse, der Zählerstand und vor allen Dingen auch die physikalische Einheit automatisch immer richtig und es können die Verbrauchsdaten von verschiedenen Funk-Ressourcenzählern, wie Wasserzähler, Wärmezähler, Gaszähler, Elektrozähler, über Entfernungen bis zu 500 Meter drahtlos empfangen und zur Anzeige gebracht werden. Die von den Funk-Ressourcenzählern ausgesendeten Funktelegramme werden beispielsweise 3 mal pro Tag empfangen und decodiert, wobei die maximale Dauer der Empfangsphase im Verbrauchsanzeigegerät ca. 60 Sekunden ist, selbige jedoch, aus Gründen der Batterieenergieeinsparung, sofort nach dem Empfang aller relevanten Funkressourcenzähler vorzeitig beendet wird.

Im Einzelnen weist das erfindungsgemäße Verbrauchsanzeigegerät eine Antenne A, einen mit der Antenne A verbundenen Funkempfänger F für den von einer Sendeeinrichtung des Verbrauchszählers gesendeten Zählerstand und Zähleradresse, eine mit dem Funkempfänger F verbundene Steuereinrichtung ST mit einem Programm- und Datenspeicher SP zur Zwischenspeicherung der über die Antenne A und Funkempfänger F zugeführten Daten, mit der Steuereinrichtung ST verbundene Eingabe- und Anzeigemittel T, AZ zur benutzergesteuerten Bedienung und Anzeige des Zählerstandes und Batterien oder wiederaufladbare Batterien zur Stromversorgung SV auf. Der Programm-und Datenspeicher SP (sowohl für die Funkadressen, wie auch für die Zählerstände / historischen Zählerstände) ist nichtflüchtig ausgeführt. Das bedeutet, dass beim Ausfall, Herausnehmen oder Wechsel der Batterien, keine Daten verloren gehen. Nach einem Batteriewechsel arbeitet das Gerät normal weiter, es ist nicht erforderlich in irgendeiner Weise eine Neukonfiguration vorzunehmen. Weiterhin kann dieser, ohne Änderung der Erfindung bzw. des Grundkonzepts, auch als separater Speicher ausgestaltet sein, welcher auch modular erweitert und ausgetauscht werden kann. Vorzugsweise sind die Anzeigemittel als LCD-Anzeige AZ ausgestaltet, an welcher solche Verbrauchszähler mit Symbol und Zählerstand anzeigbar sind, welche für den Endkunden bestimmt sind. Insbesondere kann die Person, die das Verbrauchsanzeigegerät in Betrieb nimmt, die Zähler auswählen, die der Kunde sehen soll (ausfiltern). Bei diesem Schritte kann dem Verbrauchszähler auch ein Symbol zugeordnet werden, mit dem der Kunde dann den betreffenden Zähler (Kalt- Warmwasser, Elektrizität, Gas, etc.) wieder erkennen kann. Weiterhin kann dabei auch herausgefunden werden, ob ein Zähler für den betreffenden Kunden ggfs. defekt ist, da er in der Liste der empfangbaren Verbraüchszähler nicht auftaucht.

Optional ist mit der Steuereinrichtung ST eine Schnittstellenschaltung I zur Nachrichtenübertragung zu einer zentralen Datenerfassungseinrichtung über drahtlose/drahtgebundene Nachrichtenübertragungsstrecken verbunden. Diese ebenfalls von der internen Batterie SV gespeiste Schnittstellenschaltung I kann drahtlos mit öffentlichen Kommunikationsnetzen (GSM, GPRS, Internet) verbinden und die gesammelten Verbrauchsdaten in regelmäßigen zeitlichen Intervallen an einen entfernten Empfänger versenden. Im Falle eines (Leckage-) Alarms wird außerhalb der regelmäßigen zeitlichen Intervalle eine Alarmmeldung versendet. Erfindungsgemäß speichert bei der Erst-Inbetriebnahme des Verbrauchsanzeigegeräts die Steuereinrichtung ST die von allen im Empfangsbereich liegenden Verbrauchszählern gesendeten Zählerstände und Zähleradressen im Programm- und Datenspeicher SP ab. Weiterhin vergleicht die Steuereinrichtung ST die empfangenen Zähleradressen mit den gespeicherten Zähleradressen und konfiguriert bei Übereinstimmung die Anzeigemittel AZ für die Anzeige des jeweiligen Zählerstands, so dass nach der Selbstkonfiguration automatisch die Zählerstände von empfangbaren Verbrauchszähler anzeigbar sind, Vorzugsweise wählt die Steuereinrichtung ST die für den Endkunden bestimmten Verbrauchszähler aus und zeigt, insbesondere bei einer Ausgestaltung der Anzeigemittel als LCD-Anzeige AZ neben dem Zählerstand ein Symbol des Verbrauchszählers an. Alternativ kann bei einer einfachen Anzeige das Symbol mittels Leuchtdioden optisch signalisiert werden; ergänzend können mittels Leuchtdiode/n entsprechende Alarmmeldungen angezeigt werden, welche beispielsweise durch Blinken in unterschiedlichen Frequenzen der Leuchtdiode/n voneinander unterschieden werden können.

Die Auswahl der für den Endkunden bestimmten Verbrauchszähler kann über mit der Steuereinrichtung ST verbundene Eingabemittel T, insbesondere Tastatur erfolgen. Die in den Datenspeicher SP eingelesenen Daten werden mit einer Kennung (Zähleradresse und Datum) unverkennbar abgelegt, wobei ohne Authentisierung ein Löschen des Datenspeichers SP nicht möglich ist. Die Benutzerführung und Fehlertoleranz der Software der Steuereinrichtung ST des Verbrauchsanzeigegeräts verhindern somit Benutzerfehler. Vorzugsweise ermittelt die Steuereinrichtung ST in regelmäßigen Zeitabständen die Zählerstände der Verbrauchszähler, speichert diese ab und ermittelt den Verbrauch. Weiterhin fragt die Steuereinrichtung ST den Ladezustand, die Empfangsfeldstärke und nach Wahl des Endkunden den jeweiligen aktuellen und/oder durchschnittlichen Verbrauch ab und zeigt die Werte entsprechend an. Neben der Anzeige der aktuellen Verbrauchsdaten, werden, je nach Einstellung die wöchentliche, monatlichen oder jährlichen Vergangenheitswerte gespeichert und auf Benutzeranforderung zur Anzeige gebracht. Zusätzlich zur Anzeige wird der Durchfluss überwacht und im Falle z.B. einer Leckage ein optischer Alarm ausgelöst.

In Weiterbildung der Erfindung kann, beispielsweise zum Diebstahlschutz bzw. zur Berechtigung des Ausblendens von empfangbaren Verbrauchszähler, dem Verbrauchsanzeigegerät eine eindeutige Seriennummer fest zugeordnet werden; das Betriebsprogramm kann modular erweitert und ausgetauscht werden; die Kommunikationsfunktionen bzw. Anwendungen sind nicht fest vorgegeben, sondern sind auf Basis einer frei programmierbaren (und auf Kommunikationsfünktionen optimierten) Steuereinrichtung ST ausgebildet, so dass Erweiterungen oder Implementierungen komplett neuer Anwendungen per Softwareupdate erfolgen können; es können Übergänge in andere Netze (über GSM-Provider bzw. UMTS-Provider (UMTS Universal Mobile Telephone Service)), die Realisierung von Standortaktualisierungen, die Abfrage von Authentisierungsdaten oder die Fernkonfiguration und/oder das Durchführen von Tests des Verbrauchsanzeigegeräts ohne Änderung des erfindungsgemäßen Konzepts erfolgen; die Speicherverwaltung der Steuereinrichtung ST kann den Benutzer bei nicht ausreichender Speicherkapazität warnen und kann im Falle des vollen Datenspeichers SP keine weitere Übernahme zulassen u.a.

## Patentansprüche

1. Verbrauchsanzeigegerät zur Anzeige des Zählerstandes einer Mehrzahl Verbrauchszählern im Heimbereich eines Endkunden, welches aufweist:
- eine Antenne (A),
- einen mit der Antenne (A) verbundenen Funkempfänger (F), der den von einer Sendeeinrichtung eines Verbrauchszählers gesendeten Zählerstand und Zähleradresse empfängt,
- eine mit dem Funkempfänger (F) verbundene Steuereinrichtung (ST),
- einen Programm- und Datenspeicher (SP) zur Zwischenspeicherung der über die Antenne (A) und Funkempfänger (F) zugeführten Daten,
- mit der Steuereinrichtung (ST) verbundene Eingabe- und Anzeigemittel (T, AZ) zur benutzergesteuerten Bedienung und Anzeige des Zählerstandes und
- Batterien oder wiederaufladbare Batterien zur Stromversorgung (SV) des Geräts, **dadurch gekennzeichnet, dass**
das Verbrauchsanzeigegerät selbst konfigurierbar ist,
zur Ausführung der Selbstkonfiguration bei der Erst-Inbetriebnahme des Verbrauchsanzeigegeräts die Steuereinrichtung (ST) die von allen im Empfangsbereich liegenden Verbrauchszählern gesendeten Zählerstände und Zähleradressen im Programm- und Datenspeicher (SP) abspeichert und nach Maßgabe der Zähleradressen die Anzeigemittel (AZ) konfiguriert, wobei im Rahmen der Konfiguration eine Selektierung der Verbrauchszähler erfolgt.

2. Verbrauchsanzeigegerät nach Anspruch 1, **dadurch gekennzeichnet, dass** die Anzeigemittel als LCD-Anzeige (AZ) ausgestaltet sind und dass Verbrauchszähler mit Symbol und Zählerstand anzeigbar sind, welche für den Endkunden bestimmt sind.

3. Verbrauchsanzeigegerät nach Anspruch 1, **dadurch gekennzeichnet, dass** mit der Steuereinrichtung (ST) eine Schnittstellenschaltung (I) zur Nachrichtenübertragung zu einer zentralen Datenerfassungseinrichtung über drahtlose/drahtgebundene Nachrichtenübertragungsstrecken verbunden ist.

4. Verfahren zur Konfiguration eines Verbrauchsanzeigegeräts mit einer mit einem Funkempfänger (F) verbundenen Steuereinrichtung (ST), einem Programm- und Datenspeicher (SP) zur Zwischenspeicherung der über eine Antenne (A) und Funkempfänger (F) zugeführten, von einer Sendeeinrichtung eines Verbrauchszählers gesendeten Zählerstand und Zähleradresse, bei dem:
- bei der Erst-Inbetriebnahme erfolgenden Selbstkonfiguration des Verbrauchsanzeigegeräts die Steuereinrichtung (ST) die von allen im Empfangsbereich liegenden Verbrauchszählern gesendeten Zählerstände und Zähleradressen im Programm- und Datenspeicher (SP) abspeichert,
- die Steuereinrichtung (ST) die empfangenen Zähleradressen mit ausgewählten Zähleradressen vergleicht und
- die Steuereinrichtung (ST) bei Übereinstimmung die Anzeigemittel (AZ) für die Anzeige des jeweiligen Zählerstands konfiguriert,
wobei nach der Selbstkonfiguration die Zählerstände der empfangbaren und für den Endkunden bestimmten Verbrauchszähler automatisch angezeigt werden.

5. Verfahren nach Anspruch 4, **dadurch gekennzeichnet, dass** die Steuereinrichtung (ST) bei einer Ausgestaltung der Anzeigemittel als LCD-Anzeige (AZ) neben dem Zählerstand ein Symbol des Verbrauchszählers anzeigt.

6. Verfahren nach Anspruch 5, **dadurch gekennzeichnet, dass** die Auswahl der für den Endkunden bestimmten Verbrauchszähler über mit der Steuereinrichtung (ST) verbundene Eingabemittel (T) erfolgen kann.

7. Verfahren nach Anspruch 4, **dadurch gekennzeichnet, dass** die Steuereinrichtung (ST) in regelmäßigen Zeitabständen die Zählerstände der Verbrauchszähler abfragt, abspeichert und den Verbrauch ermittelt.

8. Verfahren nach Anspruch 4, **dadurch gekennzeichnet, dass** die Steuereinrichtung (ST) Ladezustand, Empfangsfeldstärke und nach Wahl des Endkunden den jeweiligen aktuellen und/oder durchschnittlichen Verbrauch ermittelt und anzeigt.

## Claims

1. Consumption display appliance for displaying the meter reading of a plurality of consumption meters in the home of an end customer, which has:
- an antenna (A),
- a radio receiver (F) that is connected to the antenna (A) and that receives the meter reading and meter address sent by a transmission device of a consumption meter,
- a control device (ST) connected to the radio receiver (F),
- a program and data memory (SP) for buffer-storing the data supplied via the antenna (A) and radio receiver (F),
- independent display means (T, AZ), connected to input and the control device (ST), for user-controlled operation and display of the meter reading, and
- batteries or rechargeable batteries for supplying power (SV) to the appliance, **characterized in that** the consumption display appliance is self-configurable, in order to execute the self-configuration when the consumption display appliance is first started up the control device (ST) stores the meter readings and meter addresses sent by all consumption meters that are in the reception range in the program and data memory (SP) and configures the display means (AZ) on the basis of the meter addresses, said configuration involving selection of the consumption meters.

2. Consumption display appliance according to Claim 1, **characterized in that** the display means are embodied as an LCD display (AZ) and **in that** consumption meters with a symbol and a meter reading can be displayed that are intended for the end customer.

3. Consumption display appliance according to Claim 1, **characterized in that** the control device (ST) has an interface circuit (I) connected to it for the purpose of communication with a central data capture device via wireless/wired communication links.

4. Method for configuring a consumption display appliance having a control device (ST) that is connected to a radio receiver (F) and a program and data memory (SP) for buffer-storing the meter reading and meter address that is supplied via an antenna (A) and radio receiver (F) and sent by a transmission device of a consumption meter, in which:
- during the self-configuration of the consumption display appliance that takes place upon initial start-up the control device (ST) stores the meter readings and meter addresses sent by all consumption meters in the reception range in the program and data memory (SP),
- the control device (ST) compares the received meter addresses with selected meter addresses, and
- the control device (ST) configures the display means (AZ) for displaying the respective meter reading in the event of a match,
wherein after the self-configuration the meter readings of the receivable consumption meters intended for the end customer are automatically displayed.

5. Method according to Claim 4, **characterized in that** the control device (ST) displays not only the meter reading but also a symbol for the consumption meter when the display means are embodied as an LCD display (AZ).

6. Method according to Claim 5, **characterized in that** the consumption meters intended for the end customer can be selected using input means (T) connected to the control device (ST).

7. Method according to Claim 4, **characterized in that** the control device (ST) requests and stores the meter readings of the consumption meters and ascertains consumption at regular intervals of time.

8. Method according to Claim 4, **characterized in that** the control device (ST) ascertains and displays state of charge, reception field strength and the respective present and/or average consumption, according to the choice of the end customer.

## Revendications

1. Appareil d'indication de consommation destiné à indiquer la consommation compteur d'une pluralité de compteurs de consommation dans le domaine domestique d'un client final, comprenant :
- une antenne (A),
- un récepteur radio (R) connecté à l'antenne (A), qui reçoit la consommation compteur et l'adresse de compteur envoyées par un dispositif d'émission d'un compteur de consommation,
- un dispositif de commande (ST) connecté au récepteur radio (F),
- une mémoire de programmes et de données (SP) destinée à mettre en tampon les données délivrées par l'intermédiaire de l'antenne (A) et du récepteur radio (F),
- des moyens de saisie et d'affichage (T, AZ) connectés au dispositif de commande (ST) pour exploiter et afficher la consommation compteur d'une manière commandée par l'utilisateur, et
- des batteries ou des batteries rechargeables destinées à alimenter en courant (SV) l'appareil, **caractérisé en ce que**
l'appareil d'indication de consommation est auto-configurable,
**en ce que**, pour mettre en oeuvre l'auto-configuration, lors de la première mise en service de l'appareil d'indication de consommation, le dispositif de commande (ST) stocke les consommations compteur et les adresses de compteurs émises par tous les compteurs de consommation se trouvant dans la zone de réception et configure les moyens d'affichage (AZ) après fourniture des adresses de compteurs, dans lequel une sélection des compteurs de consommation est effectuée lors de la configuration.

2. Appareil d'indication de consommation selon la revendication 1, **caractérisé en ce que** les moyens d'affichage sont réalisés sous la forme d'afficheurs LCD (AZ) et **en ce que** des compteurs de consommation peuvent être affichés à l'aide d'un symbole et d'une consommation compteur qui sont déterminés pour le client final.

3. Appareil d'indication de consommation selon la revendication 1, **caractérisé en ce qu'**un circuit d'interface (I) est connecté au dispositif de commande (ST) pour la transmission de messages à un dispositif d'acquisition de données central par l'intermédiaire de trajets de transmission de messages sans fil/câblés.

4. Procédé de configuration d'un appareil d'indication de consommation comportant un dispositif de commande (ST) connecté à un récepteur radio (F), une mémoire de programmes et de données (SP) destinée à mettre en tampon la consommation compteur et l'adresse de compteur envoyées par un dispositif d'émission d'un compteur de consommation et délivrées par l'intermédiaire d'une antenne (A) et d'un récepteur radio (F), dans lequel :
- lors d'une auto-configuration faisant suite à la première mise en service de l'appareil d'indication de consommation, le dispositif de commande (ST) stocke les consommations compteurs et les adresses de compteurs envoyées par tous les compteurs de consommation se trouvant dans la zone de réception, dans une mémoire de programmes et de données (SP),
- le dispositif de commande (ST) compare les adresses de compteurs reçues à des adresses de compteurs sélectionnées, et
- le dispositif de commande (ST), lors d'une concordance, configure les moyens d'affichage (AZ) pour l'affichage de la consommation compteur respective,
dans lequel, après l'auto-configuration, les consommations compteurs des compteurs de consommation pouvant être reçus et qui sont déterminés pour le client final sont automatiquement affichées.

5. Procédé selon la revendication 4, **caractérisé en ce que** le dispositif de commande (ST) affiche un symbole du compteur de consommation en dessous de la consommation compteur lorsque les moyens d'affichage sont réalisés sous la forme d'afficheurs LCD (AZ).

6. Procédé selon la revendication 5, **caractérisé en ce que** la sélection du compteur de consommation déterminé pour le client final peut s'effectuer par l'intermédiaire de moyens de saisie (T) connectés au dispositif de commande (ST).

7. Procédé selon la revendication 4, **caractérisé en ce que** le dispositif de commande (ST) consulte les consommations compteurs des compteurs de consommation à des intervalles de temps réguliers, les stocke et détermine la consommation.

8. Procédé selon la revendication 4, **caractérisé en ce que** le dispositif de commande (ST) détermine et affiche l'état de charge, l'intensité du champ de réception et, après sélection du client final, la consommation instantanée et/ou moyenne respective.
